# EUROPEAN PATENT APPLICATION

(11) **EP 4 328 878 A1**
(43) Date of publication of application: **28.02.2024**
(21) Application number: 22192505.0
(22) Date of filing: 26.08.2022
(51) Int. Cl.: G07D 7/20, G07D 7/128, G06V 30/418, G06V 30/146, G06V 30/19, G06T 3/00

(54) **AUTHENTICATION OF PAPER DOCUMENTS WITH HELP FROM DIGITAL MEANS**

(71) Applicant: ETH Zurich, 8092 Zurich (CH)
(72) Inventor: Ochoa Ronderos, Martin, 8400 Winterthur (CH); Toro-Pozo, Jorge, 8051 Zurich (CH); Basin, David, 8803 Rüschlikon (CH)
(74) Representative: P&TS SA (AG, Ltd.)

(57) **Abstract**

The invention relates to a method for facilitating forgery detection of a received paper document (12) using a mobile device (13). The method comprises the following steps: a) receiving (1) an original reference image (10), b) receiving (2) an image (15) of the received paper document (12) captured using a camera in the mobile device (13), c) receiving (3) a first threshold δ and a second threshold τ, d) determining (4) a homography between the captured image (15) and the original reference image (10), e) aligning (4) the captured image (15) to the original reference image (10) based on the determined homography, the aligning providing an aligned captured image (17), f) determining (5) a difference map (16) based on the aligned captured image and the original reference image, g) determining (5) a first difference region in the difference map using the first threshold δ and the second threshold τ, and determining (5) a first region in the aligned captured image and a first region in the original reference image corresponding to the determined first difference region, h) determining (6) a further region in the aligned captured image based on the first region in the aligned captured image, and determining (6) a further region in the original reference image based on the first region in the original reference image, i) determining (7) a further homography between the further region in the aligned captured image and the further region in the original reference image, j) aligning (7) the further region in the aligned captured image to the further region in the original reference image based on the determined further homography, the aligning providing an aligned further region of the aligned captured image, k) determining (8) a further difference map based on the aligned further region and the further region in the original reference image, I) determining (8) a second difference region in the further difference map using the first threshold δ and the second threshold τ, and determining (8) a second region in the aligned further region and a second region in the original reference image corresponding to the determined second difference region, and m) providing an output region, based on the second region, in the aligned further region and an output region, based on the second region, in the original reference image as output (9). The invention also relates to a computer programme product and to a mobile device configured to carry out the computer programme product.

## Description

### Field of the invention

The present invention relates to a method for facilitating forgery detection of a received paper document using a mobile device. The present invention further relates to a computer program product and to a mobile device configured to carry out the computer program product.

### Background to the invention

Forgery of printed documents is a widespread problem. Despite advances in digitalization, printed paper is still widely used for documents of various degrees of sensitivity. In enterprise environments, for example, departments like human resources, legal, and accounting are still predominantly paper-centric. To increase security against forgery, traditionally physical measures such as security paper, holograms, and watermarks have been deployed. It is, however, known that sophisticated and successful attacks have been leveraged against such traditional security schemes. There is therefore need for improved forgery detection schemes.

### Summary of the invention

According to a first aspect of the present invention there is provided a method for facilitating forgery detection of a received paper document using a mobile device, involving the steps recited in claim 1. Further features and embodiments of the method of the present invention are described in the dependent patent claims.

The invention relates to a method for facilitating forgery detection of a received paper document using a mobile device, the method comprising the following steps: a) receiving an original reference image, b) receiving an image of the received paper document captured using a camera in the mobile device, c) receiving a first threshold δ and a second threshold τ, d) determining a homography between the captured image and the original reference image, e) aligning the captured image to the original reference image based on the determined homography, the aligning providing an aligned captured image, f) determining a difference map based on the aligned captured image and the original reference image, g) determining a first difference region in the difference map using the first threshold δ and the second threshold τ, and determining a first region in the aligned captured image and a first region in the original reference image corresponding to the determined first difference region, h) determining a further region in the aligned captured image based on the first region in the aligned captured image, and determining a further region in the original reference image based on the first region in the original reference image, i) determining a further homography between the further region in the aligned captured image and the further region in the original reference image, j) aligning the further region in the aligned captured image to the further region in the original reference image based on the determined further homography, the aligning providing an aligned further region of the aligned captured image, k) determining a further difference map based on the aligned further region and the further region in the original reference image, I) determining a second difference region in the further difference map using the first threshold δ and the second threshold τ, and determining a second region in the aligned further region and a second region in the original reference image corresponding to the determined second difference region, and m) providing an output region, based on the second region, in the aligned further region and an output region, based on the second region, in the original reference image as output.

A user receives a paper document and captures an image of the received paper document using a camera of a mobile device, e.g., embodied as a mobile phone, in particular a smartphone, or as a tablet. The resolution and size of the captured image (potentially after a first image processing step) may correspond to the resolution and size of the digitally received original reference image. "Receiving" of the original reference image may be understood as obtaining the original reference image from an external information source, e.g., embodied as a server, using digital (or potentially also analogue) communication means.

During the capturing of an image of the received paper document using the mobile device, distortions of the captured image may arise, e.g., in case the camera of the mobile device is positioned obliquely with respect to the received paper document during image capturing. Further distortions may arise in case the received paper document is not fully flat while the image is captured: this may, for example, be a consequence of the received paper document having been previously folded.

To compare the captured image of the received paper document to the original reference image, the captured image is aligned to the original reference image using an estimated homography. The homography may be detected using homography estimation techniques known from the prior art. Specifically, suitable features in the captured image and in the original reference image obtained as, e.g., scale invariant feature transform (SIFT) features and/or speeded up robust features (SURF) may be matched across the captured image and the original reference image and based on the determined matches a homography may be determined. A homography relates two images of a same planar surface in space and can be used to align these two images.

The first threshold δ and the second threshold τ influence detection sensitivity of forgeries in the received paper document. For two images *d* and *d'* of same dimension, for example, a difference map may be used as basis for detecting forgeries, the difference map, e.g., being defined as follows: *diff*(*i,j*) = |*d*(*i,j*) - *d'*(*i,j*)|, with *i* and *j* indexing pixel positions in two-dimensional arrays representing the respective images *d* and *d',* and |·| denoting an absolute value. A (*δ,τ*) - forgery may be defined as a set of *k* connected pixels in the difference map, with *k* required to be larger than *τ*, wherein for each pixel in the connected pixels the respective value in the difference map is smaller than *δ*. A larger *τ* therefore typically leads to fewer detected forgeries compared to a smaller *τ*, and the opposite holds for *δ*. Typical values for *τ* may be between 10 to 20 (pixels), for example, and for *δ* 0.35.

(*δ,τ*) - forgery detection is applied to the difference map between the aligned captured image and the original reference image. As a result of (*δ,τ*) - forgery detection, a (potentially empty) list of regions in the difference map may be identifed. In case of one or more such regions with potential forgery, one of these regions is termed first difference region. The first difference region may be related to a forgery in the received paper document; the first difference region may, however, also be a result of a distortion between the captured image and the original reference image which was not corrected using the previously applied homography. As a homography assumes that the surface of which two images are taken (in the present case the captured image and the original reference image) is planar, folds in the paper will typically not be corrected by applying the determined homography to the captured image: such distortions may faultily be identified as (*δ,τ*) - forgeries. To differentiate correctly identified from faultily identified forgery regions, further analysis is carried out.

Specifically, a neighbourhood of the first region in the aligned captured image and of the first region in the original reference image may be constructed, wherein these two first regions correspond to the first difference region: these two respective neighbourhoods are termed further regions. The respectively constructed neighbourhoods may have fixed and pre-determined size, or the neighbourhoods may be constructed by adding safety margins to the two first regions in the aligned captured image and in the original reference image. Subsequently, a further homography is estimated between these two further regions, the assumption being that zooming in may improve local planarity of the imaged surface and that homography correction may therefore work in an improved manner. In order to compute the further homography, new features may be determined in the two further regions and matched with one another. The further region in the aligned captured image is then aligned to the further region in the original reference image using the determined further homography and a further difference map is computed. The further difference map is subsequently analysed for (*δ,τ*) - forgeries. As a result of (*δ,τ*) - forgery detection, a (potentially empty) list of regions in the further difference map may be identified. In case of one or more such regions with potential forgery, one of these regions is termed second difference region.

The previously described process may be continued in an iterative manner. Specifically, based on the second difference region, another further region may be constructed and another further homography may be determined. This process of re-analysing potential regions of difference may be repeated until a fixed point is reached, i.e., until further re-analysis does not remove detected differences e.g. due to geometric distortion. Alternatively, the process may be terminated after a pre-set number of iterations. The output region, based on the second region, in the aligned further region and the output region, based on the second region, in the original reference image provided as output may therefore correspond directly to the second regions, or they may be derived by further iterative re-analysis as just described based on the second region.

In an embodiment of the method according to the invention, the method further comprises receiving a rotation angle *ϕ*, wherein the homography between the captured image and the original reference image is only determined in case the camera capturing the received paper document is rotated by at most the rotation angle ϕ around a normal vector of the received paper document in a flattened state.

As previously stated, a homography relates two images of a same planar surface in space. Assuming that the received paper document is in a flattened state during image capture, i.e., the received paper document is spread out flatly on a flat surface, for example, a normal vector pointing away from the flat surface may be defined. Further, it may be assumed that the original reference image is such that a camera axis of a (hypothetical) camera which (hypothetically) could have captured the original reference image is parallel to this normal vector as well, i.e., the original reference image is view "directly from above"; in typical cases, however, the original reference image is not captured using a camera but digitally generated and displayed in a frontal view. Since a homography may be represented using a homography matrix and said homography matrix encodes rotation information between the two images related by said homography, a rotation angle between the two images may be determined from the homography matrix. The rotation angle *ϕ* may be set to 30 degrees. Other values may, however, be feasible as well.

In a further embodiment of the method according to the invention, the determining of the homography comprises 1) determining at least four descriptive features in the captured image of the received paper document, 2) determining at least four descriptive features in the original reference image, and 3) matching at least four of the at least four descriptive features in the captured image to at least four of the at least four descriptive features in the original reference image.

The descriptive features may be determined as SIFT and/or as Oriented FAST and/or as Rotated BRIEF (ORB) features, for example. Other types of features may, however, be suitable too.

In a further embodiment of the method according to the invention, the determining of the further homography comprises 1) determining at least four descriptive features in the further region in the aligned captured image, 2) determining at least four descriptive features in the further region in the original reference image, and 3) matching at least four of the at least four descriptive features in the further region in the aligned captured image to at least four of the at least four descriptive features in the further region in the original reference image.

Similar types of features may be used for the determining of the further homography as are used for the determining of the homography.

In a further embodiment of the method according to the invention, the determining of the difference map comprises subtracting the aligned captured image from the original reference image and subsequently taking an absolute value of said subtraction, and/or the determining of the further difference map comprises subtracting the aligned further region from the further region in the original reference image and subsequently taking an absolute value of said subtraction.

Besides subtraction and the subsequent taking of an absolute value, other operations are feasible too. A mean-squared error could be used alternatively, or other known error/difference metrics as well.

In a further embodiment of the method according to the invention, the output region in the aligned further region is embodied as the second region in the aligned further region and the output region in the original reference image is embodied as the second region in the original reference image.

After having determined the second region in the aligned further region and the corresponding second region in the original reference image, the method may terminate by providing the second region directly as output. Alternatively, the second region may serve as starting point for further analysis.

In a further embodiment of the method according to the invention, the output region in the aligned further region and the output region in the original reference image provided as output of method step m) are respectively visually indicated on top of the captured image and on top of the original reference image to a user.

The output region in the aligned further region and the output region in the original reference image may be displayed on top of the captured image and on top of the original reference image to a user of the mobile device. This way, the user may focus his attention on the highlighted regions and verify whether forgery has taken place in the highlighted region of the captured image. It is also feasible to only display the output region in the captured image to the user or to only display the output region in the original reference image to the user.

In a further embodiment of the method according to the invention, the determining of the first difference region in the difference map comprises determining at least τ connected pixels in the difference map whose respective value is each smaller than 6, and/or the determining of the second difference region in the further difference map comprises determining at least τ connected pixels in the further difference map whose respective value is each smaller than δ.

In a further embodiment of the method according to the invention, the first threshold δ and/or the second threshold τ are embodied as position-dependent thresholds.

The first threshold δ and/or the second threshold τ may vary across the difference map/the further difference map. This way, different areas may be analysed for potential forgeries with different sensitivities. In case it is known that an area in the original reference document/the received paper document is particularly important/critical, these two thresholds may be adjusted in that area to increase likelihood of observing a potential threshold, for example. The place where a name or an address may appear may, for example, be more sensitive than other parts of a document. The issuer, e.g., a bank, can encode such regions specifying coordinates of rectangles and setting a more stringent τ / δ configuration for that region in a QR code printed on the received paper document. That is, the QR code can contain a default τ / δ for the whole document and a list of rectangles (four coordinates each) with a different τ / δ to be applied in each rectangle. In those rectangles smaller differences, for example, can then be detected than in the rest of the document. This may help minimizing false positives in less important regions and avoiding missing attacks in sensitive regions.

In a further embodiment of the method according to the invention, the determining of the further region in the aligned captured image and of the further region in the original reference image comprises determining a set of pixels in the aligned captured image and in the original reference image which respectively comprise all pixels in the first region in the aligned captured image and in the first region in the original reference image.

The further region may therefore fully comprise the first region. The size of the further region may also be pre-set, e.g., to 80 x 80 pixels in an image of size 1700 x 2200 pixels; in this case, the first region may be substituted with the pre-set further region, e.g., centred at a central point of the first region; in case the further region has pre-set size, the further region may not fully cover the entire first region. The further region may also be constructed by adding a safety margin to the first region.

In a further embodiment of the method according to the invention, in method step b) a plurality of images of the received paper document is captured using the camera in the mobile device, and method steps c) to I) are carried out independently for each image in the plurality of images, and the output of method step m) is only provided if the output region in the aligned further region and the output region in the original reference image are identified in at least k consecutive images of the captured plurality of images, with k being a predefined threshold.

Each image in the plurality of images may be treated independently. Processing a plurality of images may allow to give real-time feedback to a user on the quality of the images received. For a fixed number *k,* the results of the analysis of the last *k* frames may be compared. In case the results are identical, i.e., the frames are authentic or they comprise potential forgeries in the same positions, the result may be reported.

In a further embodiment of the method according to the invention, a QR code is printed on the received paper document, the QR code comprising the following: 1) a uniform resource locator *U* pointing to an encrypted version *E* = *Enc_{k_{d}}*(*d*) of the original reference image *d,* with *Enc_{k_{d}}*(·) denoting encryption with a symmetric key *k_{d}*; 2) a hash *h*(*d*) of document *d*; 3) the symmetric key *k_{d}*; 4) values of the first threshold δ, of the second threshold τ, of the rotation angle ϕ, and of a neighbourhood parameter σ used during the determining of the further region in the aligned captured image and of the further region in the original reference image; 5) a signature *S* = *Sign_{k_{I}}*(*h*(*U,h*(*d*)*,k_{d},τ,δ,*ϕ,*σ*)), with *k_{I}* being an asymmetric private key and *Sign_{k_{I}}*(·) being a signature function; 6) a secure timestamp *t* of *S*; and 7) a fingerprint of the public key *K_{I}* corresponding to the private key *k_{I}.*

In a further embodiment of the method according to the invention, the receiving the original reference image comprises the following steps: 1) identifying a public key *K_{I}* using the fingerprint encoded in the QR code; 2) verifying the signature *S* encoded in the QR code using the identified public key *K_{I};* 3) verifying the timestamp *t* using a public key *K_{TS}* of a time-stamping service and checking whether a time used in the timestamp and *k_{I}* are coherent with respect to a certificate revocation list; 4) downloading the encrypted document *E*; 5) decrypting *E* using the symmetric key *k_{d}*; 6) verifying the hash of the decrypted *E*, and if faithfully verified, 7) using the decrypted *E* as the original reference image.

According to a second aspect of the present invention there is provided a computer program product comprising program code which when executed by a processor causes the processor to carry out a method according to the invention.

According to a third aspect of the present invention there is provided a mobile device comprising a storage, a processor, and a camera, with the mobile device being configured to carry out a computer program product according to the invention.

The mobile device may be embodied as a mobile phone, in particular a smartphone, or as a tablet. Other types of mobile devices may, however, be used as well.

### Brief description of drawings

Exemplar embodiments of the invention are disclosed in the description and illustrated by the drawings in which:
Fig. 1 schematically illustrates a system-level view of forgery detection using a method for facilitating forgery detection according to the present invention;
Fig. 2 schematically illustrates an embodiment of the method according to the invention for facilitating forgery detection;
Fig. 3 schematically illustrates a difference map as used in the method according to the invention;
Fig. 4 schematically illustrates another embodiment of the method according to the invention for facilitating forgery detection; and
Fig. 5 shows pseudo-code describing an embodiment of the method according to the invention for facilitating forgery detection.

### Detailed description of drawings

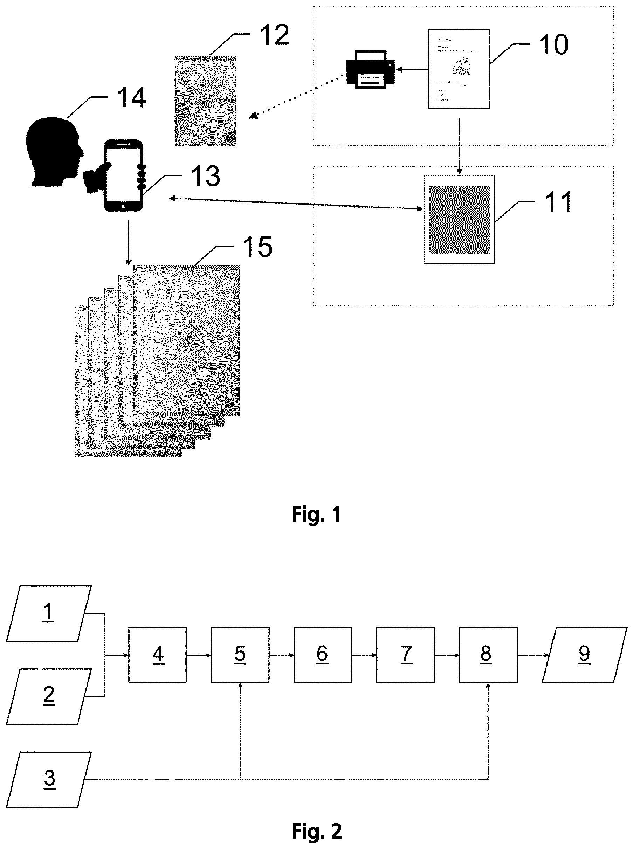

**Fig. 1** schematically illustrates a system-level view of forgery detection using a method for facilitating forgery detection according to the present invention. An issuer, e.g., a bank, may issue an original reference image 10 such as an account statement, which original reference image 10 may be securely stored in a symmetrically encrypted manner as encrypted original reference image 11 on a server accessible from outside. The bank furthermore may possess a public/private key pair. With the private key, the bank may sign a URL at which a digital copy of the document to be authenticated is stored on the server together with a hash of the image's content.

The issuer prints the original reference image 10. The printed document may comprise a QR comprising the previously created signature, the URL, the document's hash value, and the symmetric key used for encrypting the original reference image. The issuer then sends the printed document to a user 14, e.g., a customer of the bank, who thereby obtains a received paper document 12 (the QR code is visible in the bottom right corner of the received paper document 12 in Fig. 1). On a mobile device 13, e.g., a smartphone equipped with a camera, of the user 14, an application programme - which application programme is a computer programme product - is installed which has access to the issuer's public key. Using this key and based on an image 15 captured by the mobile device 13, the application programme can verify the signature in the QR code and download and decrypt - using the symmetric key - the encrypted original reference image using the URL from the server on which it is stored.

For authenticating the received paper document 12, the application programme running on the mobile device 13 may capture a plurality of images 15 of the received paper document 12. The application programme may be configured to carry out a method according to the invention for facilitating forgery detection, the results of which method may be displayed to the user 14 on a screen of the mobile device 13.

**Fig. 2** schematically illustrates an embodiment of the method according to the invention for facilitating forgery detection. An original reference image is digitally received 1, and a captured image of a paper document is received 2. Furthermore, a first threshold δ and a second threshold rare received 3. In a next step, a homography between the original reference image and the captured image is determined 4, and the captured image is aligned 4 to the original reference image based on the determined homography. Subsequently, a difference map is determined 5 between the aligned captured image and the original reference image, and based on the difference map and using the received 3 thresholds, potential regions of forgery are determined 5. One of the potential regions of forgery in the difference map is termed first difference region. Based on the first difference region (corresponding to a first region in the aligned captured image and a first region in the original reference image), a further region is determined 6, and based on the further region a further homography is determined 7, which further homography is used for aligning 7 the further region in the aligned captured image to the further region in the original reference image. Subsequently, a further difference map is determined 8 based on the aligned further region and the further region in the original reference image, and based on the further difference map and using the received 3 thresholds, further potential regions of forgery are determined 8. One of the further potential regions of forgery in the difference map is termed second difference region. An output region, based on the second region corresponding to the second difference region, in the aligned further region and an output region, based on the second region corresponding to the second difference region, in the original reference image is provided 9 as output.

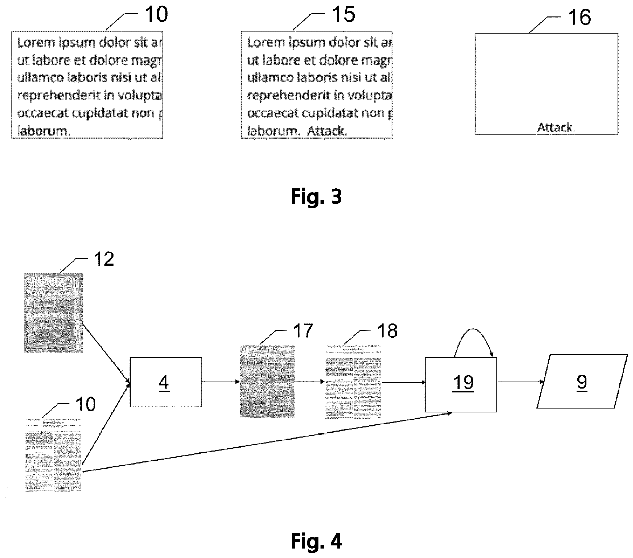

**Fig. 3** schematically illustrates a difference map as used in the method according to the invention. The original reference image 10 differs from the captured image 15 in that text is present in the captured image 15 ("Attack.") which is not present in the original reference image 10. To determine the difference map, the captured image 15 is pixelwise subtracted from the original reference image, and subsequently a pixelwise absolute value is computed; the result of these two operations is the difference map 16 in which only the added text "Attack." Is visible.

Besides such clear manipulations, the difference map may also comprise non-zero sections due to folding of the received paper document during image capture. Folded parts of the received paper document typically appear differently in the captured image than the corresponding parts of the original reference image, thereby leading to non-zero sections in the difference map 16. By using the method according to the invention, such geometrically induced distortions may be separated from actual forgery.

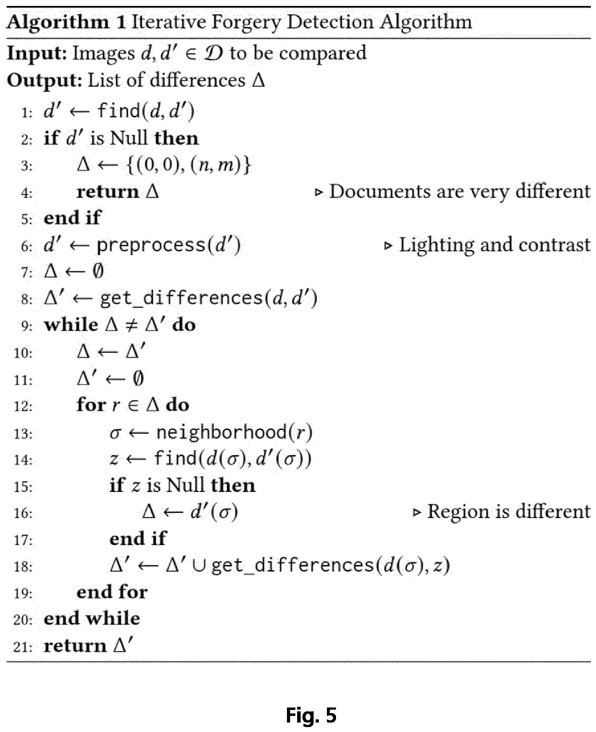

**Fig. 4** schematically illustrates another embodiment of the method according to the invention for facilitating forgery detection. A captured image of a received paper document 12 and the original reference image 10 are aligned 4 using an estimated homography between these two images. Aligning 4 specifically comprises perspective adjustment. The aligned captured image 17 is subsequently light contrast corrected 18. Thereafter, also using the original reference image 10, a set of differences is iteratively computed as described in more detail in the description of Fig. 5. The set of differences is provided as output 9.

**Fig. 5** shows pseudo-code describing an embodiment of the method according to the invention for facilitating forgery detection. Two images *d* and *d'* are received as input, with both images being *n* times *m* grayscale matrices. The algorithm provides a list of differences Δ as output.

The function *find* determines a homography between the two input images and aligns image *d'*. The function *find* may be assumed to have knowledge of rotation angle *ϕ*. In case that it is not possible to determine a homography, i.e., in case the two input images are too different and no homography can be determined, the algorithm terminates, providing as output an indication to a user that the user needs to check the entire received paper document for possible forgeries. In case a homography was successfully identified and the captured image *d'* was successfully aligned, the aligned captured image is subsequently pre-processed to improve lightning and contrast (in pseudo-code notation, this is carried out by function *preprocess*)*.* Next, a set of differences between the pre-processed aligned captured image and the original reference image is determined using the function *get_differences* (this function has access to the first threshold and to the second threshold).

In lines '9' to '20' of the pseudo-code of Fig. 5, the following is essentially carried out: the condition in line '9' ensures that the iterative algorithm terminates if no further refinement can be carried out, i.e., once the algorithm reaches a fixed point. In each iteration of the "while"-loop, all currently determined potential forgery regions are analysed. For each such region, first a neighbourhood is determined using the function *neighborhood,* and then alignment is carried out using a homography estimated between the respective neighbourhoods of the original reference image and the previously aligned (perhaps already more than once) captured image. If no such homography can be determined, i.e., in case the neighbourhoods are too different, the neighbourhood in the previously aligned captured image is provided as output. Those neighbourhoods for which a homography was successfully determined are further analysed in line '18', i.e., further subdivision into regions of potential forgery might take place.

In terms of the terminology of the claims, *d* may be identified as original reference image, *d'* as captured image of the received paper document, an element of set Δ' in line '8' of the pseudo-code may be identified as first difference region/first region, while the output of line '13' corresponding to the first difference region/first region may be identified as further region; an output of line '18' corresponding to the further region may be identified as second difference region/second region.

## Claims

1. Method for facilitating forgery detection of a received paper document (12) using a mobile device (13), the method comprising the following steps:
a) receiving (1) an original reference image (10),
b) receiving (2) an image (15) of the received paper document (12) captured using a camera in the mobile device (13),
c) receiving (3) a first threshold δ and a second threshold τ,
d) determining (4) a homography between the captured image (15) and the original reference image (10),
e) aligning (4) the captured image (15) to the original reference image (10) based on the determined homography, the aligning providing an aligned captured image (17),
f) determining (5) a difference map (16) based on the aligned captured image and the original reference image,
g) determining (5) a first difference region in the difference map using the first threshold δ and the second threshold τ, and determining (5) a first region in the aligned captured image and a first region in the original reference image corresponding to the determined first difference region,
h) determining (6) a further region in the aligned captured image based on the first region in the aligned captured image, and determining (6) a further region in the original reference image based on the first region in the original reference image,
i) determining (7) a further homography between the further region in the aligned captured image and the further region in the original reference image,
j) aligning (7) the further region in the aligned captured image to the further region in the original reference image based on the determined further homography, the aligning providing an aligned further region of the aligned captured image,
k) determining (8) a further difference map based on the aligned further region and the further region in the original reference image,
l) determining (8) a second difference region in the further difference map using the first threshold δ and the second threshold τ, and determining (8) a second region in the aligned further region and a second region in the original reference image corresponding to the determined second difference region, and
m) providing an output region, based on the second region, in the aligned further region and an output region, based on the second region, in the original reference image as output (9).

2. Method according to claim 1, further comprising receiving a rotation angle *ϕ*, wherein the homography between the captured image (15) and the original reference image is only determined (4) in case the camera capturing the received paper document (12) is rotated by at most the rotation angle ϕ around a normal vector of the received paper document in a flattened state.

3. Method according to claim 1 or 2, wherein the determining (4) of the homography comprises 1) determining at least four descriptive features in the captured image of the received paper document, 2) determining at least four descriptive features in the original reference image, and 3) matching at least four of the at least four descriptive features in the captured image to at least four of the at least four descriptive features in the original reference image.

4. Method according to any one of the preceding claims, wherein the determining (7) of the further homography comprises 1) determining at least four descriptive features in the further region in the aligned captured image, 2) determining at least four descriptive features in the further region in the original reference image, and 3) matching at least four of the at least four descriptive features in the further region in the aligned captured image to at least four of the at least four descriptive features in the further region in the original reference image.

5. Method according to any one of the preceding claims, wherein the determining (5) of the difference map comprises subtracting the aligned captured image from the original reference image and subsequently taking an absolute value of said subtraction, and/or wherein the determining (8) of the further difference map comprises subtracting the aligned further region from the further region in the original reference image and subsequently taking an absolute value of said subtraction.

6. Method according to any one of the preceding claims, wherein the output region in the aligned further region is embodied as the second region in the aligned further region and wherein the output region in the original reference image is embodied as the second region in the original reference image.

7. Method according to any one of the preceding claims, wherein the output region in the aligned further region and the output region in the original reference image provided as output of method step m) are respectively visually indicated on top of the captured image (15) and on top of the original reference image (10) to a user (14).

8. Method according to any one of the preceding claims, wherein the determining (5) of the first difference region in the difference map comprises determining at least τ connected pixels in the difference map whose respective value is each smaller than δ, and/or wherein the determining (8) of the second difference region in the further difference map comprises determining at least τ connected pixels in the further difference map whose respective value is each smaller than δ.

9. Method according to any one of the preceding claims, wherein the first threshold δ and/or the second threshold τ are embodied as position-dependent thresholds.

10. Method according to any one of the preceding claims, wherein the determining (6) of the further region in the aligned captured image and of the further region in the original reference image comprises determining a set of pixels in the aligned captured image and in the original reference image which respectively comprise all pixels in the first region in the aligned captured image and in the first region in the original reference image.

11. Method according to any one of the preceding claims, wherein in method step b) a plurality of images (15) of the received paper document (12) is captured using the camera in the mobile device (13), wherein method steps c) to I) are carried out independently for each image (15) in the plurality of images (15), and wherein the output (9) of method step m) is only provided if the output region in the aligned further region and the output region in the original reference image are identified in at least k consecutive images of the captured plurality of images, with k being a predefined threshold.

12. Method according to any one claims 2 to 11, wherein a QR code is printed on the received paper document (12), the QR code comprising the following: 1) a uniform resource locator *U* pointing to an encrypted version *E* = *Enc_{k_{d}}*(*d*) (11) of the original reference image d (10), with *Enc_{k_{d}}*(·) denoting encryption with a symmetric key *k_{d}*; 2) a hash *h*(*d*) of document *d* (10); 3) the symmetric key *k_{d}*; 4) values of the first threshold δ, of the second threshold τ, of the rotation angle ϕ, and of a neighbourhood parameter σ used during the determining (6) of the further region in the aligned captured image and of the further region in the original reference image; 5) a signature *S* = *Sign_{k_{I}}*(*h*(*U,h*(*d*)*,k_{d},τ,δ,*ϕ,*σ*))*,* with *k_{I}* being an asymmetric private key and *Sign_{k_{I}}*(·) being a signature function; 6) a secure timestamp *t* of *S*; and 7) a fingerprint of the public key *K_{I}* corresponding to the private key *k_{I}.*

13. Method according to claim 12, wherein the receiving (1) the original reference image (10) comprises the following steps: 1) identifying a public key *K_{I}* using the fingerprint encoded in the QR code; 2) verifying the signature *S* encoded in the QR code using the identified public key *K_{I}*; 3) verifying the timestamp *t* using a public key *K_{TS}* of a time-stamping service and checking whether a time used in the timestamp and *k_{I}* are coherent with respect to a certificate revocation list; 4) downloading the encrypted document *E* (11); 5) decrypting *E* (11) using the symmetric key *k_{d}*; 6) verifying the hash of the decrypted *E,* and if faithfully verified, 7) using the decrypted *E* as the original reference image (10).

14. Computer programme product comprising program code which when executed by a processor causes the processor to carry out a method according to any one of claims 1 to 13.

15. Mobile device (13) comprising a storage, a processor, and a camera, with the mobile device being configured to carry out a computer programme product according to claim 14.
